# EUROPEAN PATENT APPLICATION

(11) **EP 2 153 892 A1**
(43) Date of publication of application: **17.02.2010**
(21) Application number: 08013239.2
(22) Date of filing: 23.07.2008
(51) Int. Cl.: B01J 19/00, B01L 3/00, B01L 9/00

(54) **Microreactor system and method for operating such microreactor system**

(71) Applicant: ETH Zurich, 8092 Zürich (CH)
(72) Inventor: Seeberger, Peter H., 8049 Zürich (CH); Geyer Karolin, 8046 Zürich (CH); Trachsel, Franz, 8050 Zürich (CH)

(57) **Abstract**

A micro reactor system (10, 22) comprises a microreactor chip (10) and a chip holder (22) for removably receiving and fixing said microreactor chip (10), whereby said chip holder (22) is provided with connecting means (26, 27; 28, 29) for establishing tight fluidic connections with said microreactor chip (10), through which reactive components can be fed to, and reaction products can be removed from, said microreactor chip (10).

The use is simplified by providing a microreactor chip (10), which comprises inlet and outlet holes (13, 14, 15), which are sealed by sealing means (19), before the microreactor chip (10) is inserted into said chip holder (22), and a chip holder (22) with opening means (28, 29) for opening the sealing of said inlet and outlet holes (13, 14, 15), when said tight fluidic connections are established with said microreactor chip (10).

## Description

Chemical reactions involving air- and moisture sensitive materials are usually conducted under an inert atmosphere in flasks. The reaction setup has to be prepared under inert atmosphere (e.g. in a glove box), and all flasks are sealed under inert atmosphere. The reaction itself is performed in a chemical hood, and samples are taken through a septum. This conventional method cannot be adapted to continuous micro reaction technology since the fluidic connections needed are orders of magnitude smaller in size and of planar geometry in case of a microreactor chip.

The US-B1-6,932,951 describes a microfluidic chip made to perform heterogeneous catalysis of either bi- or triphasic systems. The chemical reactor consists of a plurality of lamina, inlet and outlet ports, a particle inlet and a particle filter within the channel system. The particle filter by itself is made by micromechanical engineering (silicon residues remaining in the channel) and is therefore covalently bound to the microfluidic chip. The chip furthermore includes gas inlet sections for performing gas-liquid-solid reactions. The heterogeneous catalyst is either deposited onto catalyst support structures made by micro-machining techniques and thin-layer deposition or solid catalyst particles are introduced via a special particle inlet and outlet system (so called "packed bed reactor").

Additionally, a reactor assembly is described which includes a described microfluidic chip, a Viton gasket sheet, a stainless steel base and an aluminium cover plate containing a cartridge heater. The fluid connections are formed by compressing the reactor against the Viton sheet which is placed on the stainless steel base. A cover plate made of aluminium or Plexiglas® compresses the chip to establish tight fluidic connections. As chemical transformations, the hydrogenation of a-methyl styrene and cyclohexene using either palladium or platin as the catalyst is described.

The WO-A1-2007/016931 describes the use of a chip-holder for holding a microfluidic chip for detachable fixing of the chip in the holder including at least one process control unit to control or to monitor the reaction progress in the chip. The control device and the microfluidic chip are directly and detachably fixed if the chip is fixed in the holder. The control device is part of the chip holder and can be a thermal, optical, or fluidic control device or an electrical coupling. This allows for the use of very simple microfluidic devices. Tight fluidic connections are established by using sealing rings, mostly elastic polymers, and nuts as fixing elements.

However, to conduct reactions involving materials which are sensitive to air and moisture in microreactor chips, the entire reaction system (feed modules, chip-holder with microreactor-chip, sample collector) have to be placed under an inert atmosphere (e.g. glove box). This is complicated and cost intensive since the relatively large volume of the glove box has to be continuously purged with inert gas.

It is therefore an object of the invention to provide a microreactor system, which avoids the disadvantages of the prior art and allows the easy and fast conduction of chemical reactions within microreactor chips including sensitive materials in standard laboratory atmosphere.

It is another object of the invention to provide a method for operating such a microreactor system.

It is another object of the invention to disclose a microreactor chip for use within said microreactor system.

According to the invention a microreactor system comprises a microreactor chip and a chip holder for removably receiving and fixing said microreactor chip, whereby said chip holder is provided with connecting means for establishing tight fluidic connections with said microreactor chip, through which reactive components can be fed to, and reaction products can be removed from, said microreactor chip, wherein the microreactor chip comprises inlet and outlet holes, which are sealed wherein that the chip holder is provided with opening means for opening the sealing of said inlet and outlet holes, when said tight fluidic connections are established with said microreactor chip.

The invention provides the simultaneous opening of the fluidic connection of a covered microreactor chip and the sealing in a specially designed chip-holder. This allows the easy and fast conduction of chemical reactions within microreactor chips including sensitive materials in standard laboratory atmosphere, whereas the sensitive material is not in contact with the atmosphere at any given time during assembly and reaction.

This invention offers potential for mass production of sealed microreactor chips with incorporated sensitive material, and the fast assembly of a microreactor chip in a chip-holder system under inert conditions circumventing contamination of the sensitive material present in the chip.

According to one embodiment of the invention, the inlet and outlet holes of said microreactor chip are each sealed by means of a sealing foil covering said inlet and outlet holes.

According to another embodiment of the invention, said inlet and outlet holes are each enclosed by a fluidic sealing, especially a sealing gasket, which is provided for establishing said tight fluidic connections between said chip holder and said microreactor chip, and in that said sealing foil rests tightly on said fluidic sealing or sealing gasket.

According to another embodiment of the invention, the microreactor chip is hermetically enclosed as a whole by said sealing foil.

Still another embodiment of the invention is **characterized in that** said opening means are designed to pierce said sealing foil at said inlet and outlet holes, when said chip holder with the inserted microreactor chip is assembled.

According to another embodiment said chip holder comprises a chip holder top part and a chip holder bottom part, which can be detachably connected to enclose an internal space for receiving said microreactor chip, and said connecting means for establishing tight fluidic connections with said microreactor chip are arranged at said chip holder top part and/or chip holder bottom part. The method for operating a microreactor system according to the invention is characterized by the steps of, providing a microreactor chip with inlet and outlet holes; which are sealed by sealing means, providing a chip holder with an internal space for receiving said microreactor chip, and with opening means for opening the sealing of said inlet and outlet holes of said microreactor chip, opening said chip holder, inserting said microreactor chip into the internal space of said chip holder, and closing said chip holder, thereby opening said sealing of said inlet and outlet holes of said microreactor chip and, at the same time, establishing tight fluidic connections between said chip holder and said microreactor chip.

According to an embodiment of the inventive method a sealing foil is used as a sealing means, and said sealing foil is pierced to open said sealing of said inlet and outlet holes.

A microreactor chip for the microreactor system according to the invention comprises at least one internal microchannel extending as a reaction zone through said microreactor chip, which microchannel is fluidly connected to inlet and outlet holes of said microreactor chip, through which reactive components can be fed to, and reaction products can be removed from, said at least one microchannel, wherein said inlet and outlet holes of said microreactor chip are each sealed by means of a sealing foil covering said inlet and outlet holes.

According to an embodiment of the inventive microreactor chip said inlet and outlet holes are each enclosed by a sealing gasket, which is provided for establishing a tight fluidic connection between said microreactor chip and a chip holder, and said sealing foil rests tightly on said sealing gasket.

According to another embodiment of the inventive microreactor chip, the microreactor chip is hermetically enclosed as a whole by said sealing foil.

According to another embodiment of the inventive microreactor chip, said sealing foil is hermetically closed by means of at least one welding seam.

According to still another embodiment of the inventive microreactor chip, said microreactor chip comprises a microreactor top part and a microreactor bottom part, which can be assembled to form a microreactor chip with at least one microchannel, and said inlet and outlet holes of said microreactor chip are arranged in said microreactor top part. Especially, said microreactor chip may contain sensitive material for effecting or supporting the reaction between the reactive components.

In said embodiments, the foil can either be wrapped tightly or shrink wrapped around the chip in order to cover the holes tightly, or the sealing material encloses the chip in a less tight manner so that the openings are sealed against the surrounding atmosphere outside of the sealing material, but not against the inner atmosphere within the sealing material.

The subject matter of the invention will be explained in more detail in the following text with reference to preferred exemplary embodiments, which are illustrated in the attached drawings, in which:
- Fig. 1: shows in a perspective view an (un-sealed) microreactor chip accord- ing to an embodiment of the invention;
- Fig. 2: shows the cross-section of the microreactor chip of Fig. 1 in the plane II-II;
- Fig. 3: shows the microreactor chip of Fig. 2 in a hermetically sealed configu- ration;
- Fig. 4: shows the step of inserting the microreactor chip according to Fig. 3 into a chip holder in accordance with another embodiment of the in- vention;
- Fig. 5: shows the moment, when the sealing foil is pierced during assembly of the microreactor system of Fig. 4; and
- Fig. 6: the assembled microreactor system of Fig. 5.

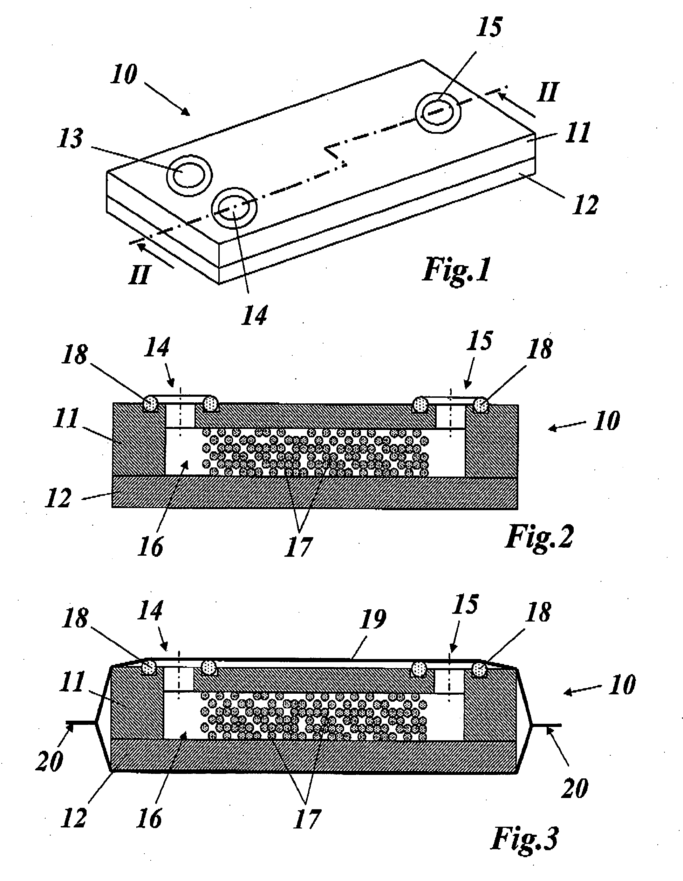

Fig. 1 shows in a perspective view a microreactor chip 10 according to an embodiment of the invention. The microreactor chip 10 of this embodiment has a flat rectangular form and comprises a microreactor top part 11 and an associated microreactor bottom part 12. On the upper side of the microreactor top part 11 various inlet and outlet holes 13, 14 and 15 are provided to connect the internal reactor zone of the microreactor chip 10 to external feeding and extracting lines. The embodiment of Fig. 1 has, for example, two inlet holes 13 and 14 at one end of the chip, and one outlet hole 15 at the other end of the chip. Number and configuration of inlet and outlet holes may vary and depend on the actual reactor requirements.

The microreactor chip 10 is preferably made of any micro-machinable material such as plastic (polymers), metal, glass, silicon, or of combinations of these materials. Reagent solutions and further fluids for the chemical reaction within the chip, or other working fluids are continuously fed via different inlet holes 13, 14 into a network of microfluidic channels (microchannel 16 in Fig. 2). After passing the channel system, the fluids exit the microreactor chip 10 downstream at the outlet hole(s) 15.

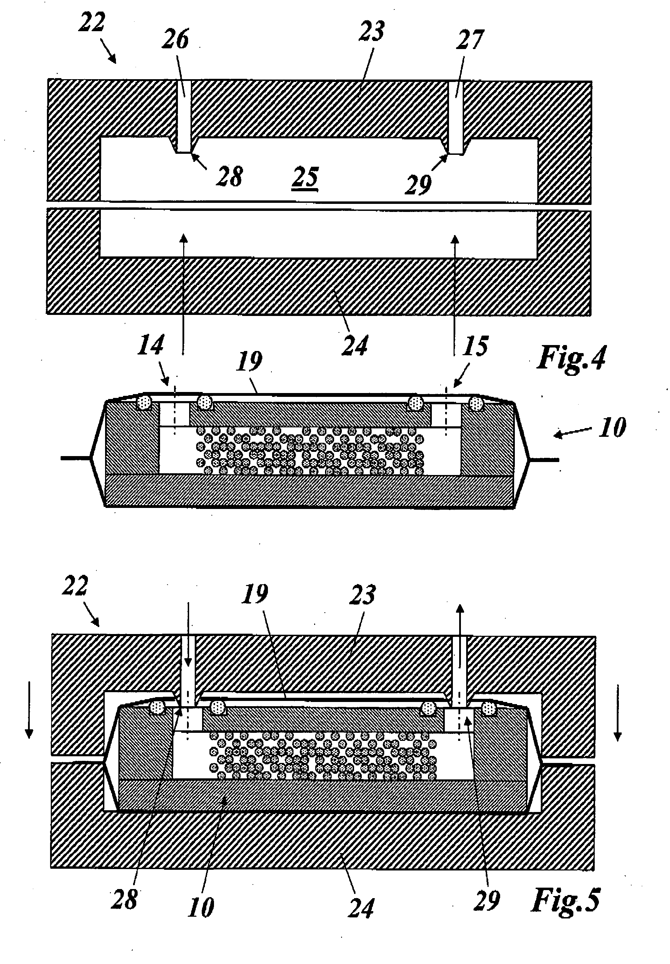

As can be seen in Fig. 2, the microreactor chip 10 is loaded with sensitive material (e.g. retained particles 17 or other material in microchannel 16) and is hermetically sealed under inert atmosphere prior to loading into the chip-holder (Fig. 3-6). The sealing material covering the fluidic inlet holes 13, 14 and outlet holes 15 of the microreactor chip 10, especially a sealing foil 19, is attached onto the chip surface. The microreactor chip 10 is entirely covered and protected from the environment by a layer of impermeable and chemically inert material, i.e. sealing foil 19. The inlet and outlet holes 13, 14, 15 are each enclosed by a sealing gasket 18, an O-ring or the like, which is provided for establishing a tight fluidic connection between a respective chip holder (22 in Fig. 4) and said microreactor chip 10. In the sealed configuration according to Fig. 3, the sealing foil 19 rests tightly on said sealing gaskets 18, such that the interior of the chip and especially the microchannel(s) 16 are hermetically separated from the environment of the chip.

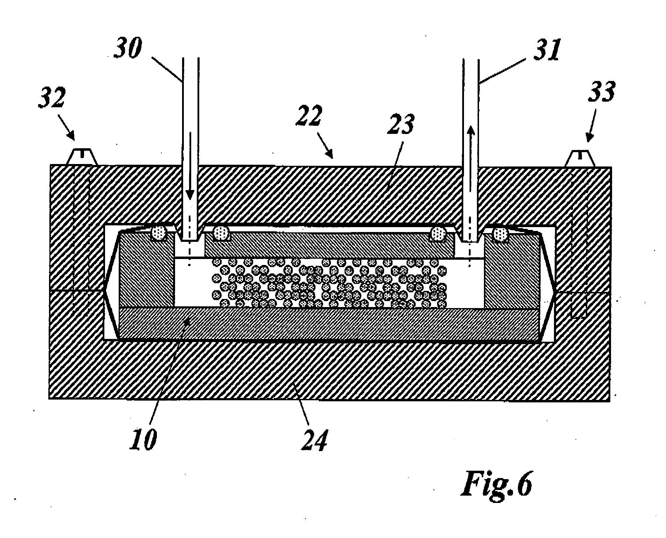

The chip holder 22 of Fig. 4 consists of a chip holder top part 23 and chip holder bottom part 24, which enclose an internal space for receiving the microreactor chip 10. However, the chip holder may be of a one-piece or hinged design. The chip holder top part 23 contains the microfluidic connections that fit onto the fluidic inlet holes 13, 14 and outlet holes 15 of the microreactor chip 10. These microfluidic connections comprise inlet channels 26 and outlet channels 27 extending through the chip holder top part 23. Towards the inner side, the microfluidic connections of the chip holder top part 23 are designed to have piercing elements 28, 29, which cut through the sealing material or foil 19 of the microreactor chip 10 and at the same time seal the connection during assembly (Fig. 5, 6). The chip holder bottom part 24 contains a defined supporting area, where the microreactor chip 10 is held in place and is supported against the pressure from the chip holder top part 23. Both chip holder parts 23 and 24 are detachably held together in the assembled state by means of bolts 32, or other connecting elements. Both chip holder parts 23, 24 may be provided with geometrical or other alignment means to align the parts in the assembled state. Furthermore, inlet ducts 30 and outlet ducts 31 may be provided at the chip holder top part (Fig. 6) to simplify the connection of the microreactor chip 10 with external sources of reacting components or drains of reaction products.

By assembling the microreactor system of chip holder bottom part 24, the microreactor chip 10 and the chip holder top part 23 (Fig. 4), and compressing the chip holder top part 23 against the chip holder bottom part 24 (Fig. 5, 6), the holes 13, 14, 15 of the microreactor chip 10 with their surrounding sealing gaskets 18 are sealed by mechanical pressure. The microfluidic connections 26, 28 and 27, 29 of the top part 23 of the chip holder 22 are designed in such a way that during the last step of assembly (Fig. 3) the cover material (sealing foil 19) of the microreactor chip 10 is penetrated and the sealing material attached to the microreactor chip 10 is compressed simultaneously. This allows for assembly of the chip holder 22 and the microreactor chip 10 without contamination of the sensitive material (particles 17) incorporated into the microfluidic device. To circumvent undesired atmosphere being present in the dead volume of the fluidic connections (inlet and outlet channels 26, 27), the connections are purged with inert gas during assembly.

### LIST OF REFERENCE NUMERALS

- 10: microreactor chip
- 11: microreactor top part
- 12: microreactor bottom part
- 13,14: inlet hole
- 15: outlet hole
- 16: microchannel
- 17: particle (retained)
- 18: sealing gasket
- 19: sealing foil
- 20: welding seam
- 22: chip holder
- 23: chip holder top part
- 24: chip holder bottom part
- 25: internal space
- 26: inlet channel
- 27: outlet channel
- 28, 29: connecting part
- 30: inlet duct
- 31: outlet duct
- 32,33: bolt

## Claims

1. Microreactor system (10, 22), comprising a microreactor chip (10) and a chip holder (22) for removably receiving and fixing said microreactor chip (10), whereby said chip holder (22) is provided with connecting means (26, 27; 28, 29) for establishing tight fluidic connections with said microreactor chip (10), through which reactive components can be fed to, and reaction products can be removed from, said microreactor chip (10), **characterized in that** the microreactor chip (10) comprises inlet and outlet holes (13, 14, 15), which are sealed by sealing means (19), before the microreactor chip (10) is inserted into said chip holder (22), and **in that** the chip holder (22) is provided with opening means (28, 29) for opening the sealing of said inlet and outlet holes (13, 14, 15), when said tight fluidic connections are established with said microreactor chip (10).

2. Microreactor system as claimed in claim 1, **characterized in that** the inlet and outlet holes (13, 14, 15) of said microreactor chip (10) are each sealed by means of a sealing foil (19) covering said inlet and outlet holes (13, 14, 15).

3. Microreactor system as claimed in claim 2, **characterized in that** said inlet and outlet holes (13, 14, 15) are each enclosed by a fluidic sealing, especially a sealing gasket (18), which is provided for establishing said tight fluidic connections between said chip holder (22) and said microreactor chip (10), and **in that** said sealing foil (19) rests tightly on said fluidic sealing or sealing gasket (18).

4. Microreactor system as claimed in claim 2 or 3, **characterized in that** the microreactor chip (10) is hermetically enclosed as a whole by said sealing foil (19),

5. Microreactor system as claimed in one of the claims 2 to 4, **characterized in that** said opening means (28, 29) are designed to pierce said sealing foil (19) at said inlet and outlet holes (13, 14, 15), when said chip holder (22) with the inserted microreactor chip (10) is assembled.

6. Microreactor system as claimed in claim 5, **characterized in that** said chip holder (22) comprises a chip holder top part (23) and a chip holder bottom part (24), which can be detachably connected to enclose an internal space (25) for receiving said microreactor chip (10), and **in that** said connecting means (26, 27; 28, 29) for establishing tight fluidic connections with said microreactor chip (10) are arranged at said chip holder top part (23) and/or chip holder bottom part (24).

7. Method for operating a microreactor system according to one of the claims 1 to 6, **characterized by** the steps of, providing a microreactor chip (10) with inlet and outlet holes (13, 14, 15), which are sealed by sealing means (19), providing a chip holder (22) with an internal space (25) for receiving said microreactor chip (10), and with opening means (28, 29) for opening the sealing of said inlet and outlet holes (13, 14, 15) of said microreactor chip (10), opening said chip holder (22), inserting said microreactor chip (10) into the internal space (25) of said chip holder (22), and closing said chip holder (22), thereby opening said sealing of said inlet and outlet holes (13, 14, 15) of said microreactor chip (10) and, at the same time, establishing tight fluidic connections between said chip holder (22) and said microreactor chip (10).

8. Method as claimed in claim 7, **characterized in that** a sealing foil (19) is used as a sealing means, and **in that** said sealing foil (19) is pierced to open said sealing of said inlet and outlet holes (13, 14, 15).

9. Microreactor chip (10) for a microreactor system according to one of the claims 1 to 6, said microreactor chip (10) comprising at least one internal microchannel (16) extending as a reaction zone through said microreactor chip (10), which microchannel (16) is fluidly connected to inlet and outlet holes (13, 14, 15) of said microreactor chip (10), through which reactive components can be fed to, and reaction products can be removed from, said at least one microchannel (16), **characterized in that** said inlet and outlet holes (13, 14, 15) of said microreactor chip (10) are each sealed by means of a sealing foil (19) covering said inlet and outlet holes (13, 14, 15).

10. Microreactor chip as claimed in claim 9, **characterized in that** said inlet and outlet holes (13, 14, 15) are each enclosed by a sealing gasket (18), which is provided for establishing a tight fluidic connection between said microreactor chip (10) and a chip holder (22), and **in that** said sealing foil (19) rests tightly on said sealing gasket (18).

11. Microreactor chip as claimed in claim 10, **characterized in that** the microreactor chip (10) is hermetically enclosed as a whole by said sealing foil (19).

12. Microreactor chip as claimed in claim 11, **characterized in that** said sealing foil (19) is hermetically closed by means of at least one welding seam (20).

13. Microreactor chip as claimed in one of the claims 9 to 12, **characterized in that** said microreactor chip (10) comprises a microreactor top part (11) and a microreactor bottom part (12), which can be assembled to form a microreactor chip with at least one microchannel (16), and **in that** said inlet and outlet holes (13, 14, 15) of said microreactor chip (10) are arranged in said microreactor top part (11).

14. Microreactor chip as claimed in one of the claims 9 to 13, **characterized in that** said microreactor chip (10) contains sensitive material (17).
